# EUROPEAN PATENT APPLICATION

(11) **EP 1 439 339 A1**
(43) Date of publication of application: **21.07.2004**
(21) Application number: 03014605.4
(22) Date of filing: 26.06.2003
(51) Int. Cl.: F16K 5/06, F16K 5/10

(54) **Ball valve**

(30) Priority: 14.01.2003 IT NO20030001 U
(71) Applicant: Fratelli Pettinaroli S.P.A, 28017 San Maurizio d'Opaglio (NO) (IT)
(72) Inventor: Pettinaroli, Giulio, 28017 San Maurizio d'Opaglio (IT); Anchisi, Sergio, 28887 Omegna (IT)
(74) Representative: Lucking, David John

(57) **Abstract**

A ball valve (1) has a housing (H) in which is mounted for rotation about an axis of operation (A), a valve member which is a ball (2), the ball (2) having a passage (P) through which fluid flows from an inlet (I) of the housing (H) to an outlet (O) of the housing (H), and the ball (2) has at one end of the passage (P) a metering opening (4) for the fluid, the ball (2) being rotatable about the axis of operation (A) between a first closed position in which the opening (4) is concealed by an adjacent housing wall and fluid flow through the passage (P) is prevented, and a fully open position in which the opening (4) is aligned with one of the inlet (I) and outlet (O) of the housing (H) to permit of maximum fluid flow through the passage (P) , and characterised in that the opening (4) in the ball (2) at the one end of the passage (P) is provided by removing material by high pressure fluid jetting.

## Description

### Description of Invention

This invention relates to a ball valve and to a method of making a ball for a ball valve.

It is known to use a rotatable ball as a valve member in a fluid line, to control the flow of fluid along the line. In one known application, a ball is provided with an opening in the form of a slot an increasing proportion of the length of which may be presented to flowing fluid, as the ball is rotated in use, to increase fluid flow. In order to provide close metered control of the fluid flow, i.e. so that amount of fluid permitted to flow can be closely and easily adjusted by manually rotating the ball, the shape of the slot requires careful designing and accurate manufacture.

An example of such a ball valve is shown in WO/01/33120. However the opening in the metal ball is provided by one of or a combination of punching, machining and laser treatments. Forming an accurate opening in a ball by punching or machining is problematical, as this can result in distortion of the ball. It has been found that cutting the opening by laser treatment can result in changes in the morphologic characteristic of the material around the periphery of the opening, which affect the crystalline structure of the material, which can lead to premature wear and thus deterioration in the accuracy of fluid flow control initially achievable.

Other proposals have been to provide a metered opening in a part which later is fitted into engagement with the remainder of the ball, 'which is an expensive procedure which requires additional method assembly steps.

According to one aspect of the invention we provide a ball valve having a housing in which is mounted for rotation about an axis of operation, a valve member which is a ball, the ball having a passage through which fluid flows from an inlet of the housing to an outlet of the housing, and the ball having at one end of the passage a metering opening for the fluid, the ball being rotatable about the axis of operation between a first closed position in which the opening is concealed by an adjacent housing wall and fluid flow through the passage is prevented, and a fully open position in which the opening is aligned with one of the inlet and outlet of the housing to permit of maximum fluid flow through the passage, and characterised in that the opening in the ball at the one end of the passage is provided by removing material by high pressure fluid jetting.

It has been found that by providing the opening by high pressure fluid jetting a more accurately formed opening may be provided than can be achieved by mechanical stamping/machine methods, and the material of the ball around the periphery of the opening is substantially not detrimentally affected by the high pressure fluid.

For example, -the opening may include a slot part which extends generally normally to the axis of operation of the ball and when the ball is rotated a small amount from its closed position, permits only a minimal fluid flow through the passage, and the slot part opening into a main part of the opening which when the ball is rotated to its fully open position allows a maximum fluid flow through the passage.

A second end of the passage opposite to the first end, and a passage part between the first and second ends of the passage may conveniently be a drilling, although may otherwise be formed, and the opening may be formed at the one end of the passage where the drilling has not penetrated an outer wall of the ball.

The ball may be provided in a metallic material such as for examples only, brass or another copper zinc alloy, -steel or another suitable metallic material.

To enable the ball to be rotated in the housing about the axis of operation, the ball may include in the outer wall of the ball, a recess to receive an operating device which may extend through the housing to an external operating position, where the operating device may include a manually graspable portion, or be connected to a motorised driver.

The ball valve may be constrained to operate through a 90° arc only, between its closed and fully open positions.

The valve may include a valve body in which the housing is provided, the body having fluid inlet and outlet connections formed by male or female fittings for example, which permit fluid to flow to the inlet and from the outlet of the housing in which the ball valve member is provided.

According to a second aspect of the invention we provide a method of making a ball for a ball valve, the ball in use being mounted in a housing for rotation about an axis of operation, the ball having a passage through which fluid flows from an inlet of the housing to an outlet of the housing, and the ball having at one end of the passage a metering opening for the fluid, and characterised in that the method includes forming the opening in the ball at the one end of the passage by removing material by high pressure fluid jetting.

In a preferred arrangement, a second end of the passage opposite to the first end, and a main passage part between the first and second ends of the passage may be provided by drilling prior to the opening at the first end of the passage being formed through the wall of the ball.

The opening may be formed by fluid jetting using fluid pressures of at least 2000 bar and more preferably at least 3000 bar and yet more preferably of about 4000 bar, depending on the thickness of the wall of the valve at the one end of the passage and the material from which the ball is formed.

During fluid jetting, desirably the method includes inserting into the passage a hollow shaft to support the ball and maintain the ball in a fixed position so that the opening may accurately be formed. The fluid may be jetted from a nozzle which may be positioned close to the wall of the ball at the one end of the passage, for example only about 5mm away. Preferably the ball is maintained stationary during water jetting and the nozzle is moved e.g. under a computer control, to create the desired shape of opening, but in another arrangement the nozzle may be held stationary and the ball moved, or both of the nozzle and ball may be moved.

The method may include providing e.g. by milling, a recess in a wall of the ball to receive an operating device by which in use, the ball may be rotated in the housing about the axis of operation.

Embodiments of the invention will now be described with reference to the accompanying drawings in which:-
FIGURE 1 is a longitudinal cross sectional view through a ball valve according to the invention;
FIGURE 2a is a perspective view of the ball of the valve of figure 1 prior to an opening being formed in a wall of the ball; and
FIGURE 2b is a side cross sectional view through the ball of figure 2a;
FIGURE 2c is a perspective view of the ball of figure 2a but subsequent to forming of the opening in accordance with the present invention; and
FIGURES 3a to 3f show the ball at various positions of rotation in use along arrow V indicated in figure 1.

Referring to the drawings, in a body of a ball valve 1, a valve member which is a spherical ball 2, is located in a housing H. The body includes a pair of ports 5, one of which in use serves as a fluid inlet port, and the other of which serves as a fluid outlet port. In this example, both of the ports 5 are provided by female threaded fittings which are adapted to receive male threaded fittings or formations on the ends of parts of a fluid line in which the valve 1 is located.

The ball.2 is located between two washers 3 which in this example are made of thermoplastic material but may be made of another polymer, such as a synthetic rubber, elastomer or the like, to provide a seal between the housing H and the ball 2 as the ball 2 is rotated in the housing H.

A wall of the ball 2 has a recess R which in use receives an operating device which in this example is a spindle 7 by means of which the ball 2 may be rotated in the housing H, the spindle 7 extending through the housing H to a position exteriorly of the valve body, where the spindle 7 receives a manually graspable part, in this case a butterfly lever6. The butterfly lever 6, the spindle 7 and the ball 2 thus rotate as one in response to rotation of the butterfly lever 6, about an axis of operation. If desired, the ball 2 may be rotated about the operating axis through 360°, but preferably is constrained to be rotatable through a 90° arc only.

Through the ball 2 there is provides a passage P which extends from one end 12 where a metering opening 4 is provided through the wall of the ball 2, along a main passage part through the ball 2, to a second end 8 where the passage P extends through the wall of the ball 2.

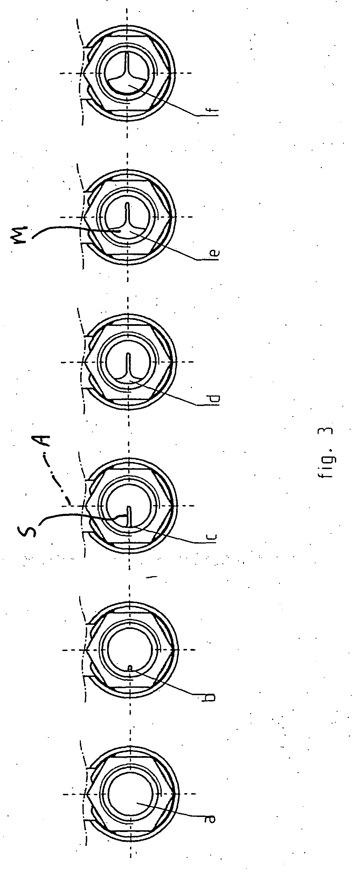

Thus the ball 2 may be rotated about the operating axis A from a closed position in which the opening 4 at the one end of the passage P, and desirably the second end 8 of the passage too, is concealed by the inside wall of the housing, as seen at figure 3a, to a fully open position seen in figure 3f, where a maximum fluid flow through the passage P may be realised, e.g. by rotating through 90°.

It will be appreciated from figures 3a to 3f that the opening 4 includes a slot part S which extends substantially normally to the axis of operation A, and which, when the ball 2 is initially rotated about the axis of operation from the fully closed position, permits only a minimal flow of fluid through the opening 4 which increases in a controlled manner as the ball 2 is further rotated, as indicated in figure 3b and 3c. The slot part S opens to a main part M which when the ball 2 is rotated further towards its fully open position, increasingly permits greater fluid flow, as indicated by figures 3d to 3f.

In all rotational positions, the seals 3 seal the ball 2 in the housing H such that any and all fluid flow is constrained to pass through the opening 4 and passage 4.

To make the ball 2, the sphere may be drawn out from bar material. In this example, the ball 2 is made of brass or another copper/zinc alloy, or steel. In another example, the ball 2 may be made by forging or casting or any other desired technique, initially as a solid sphere.

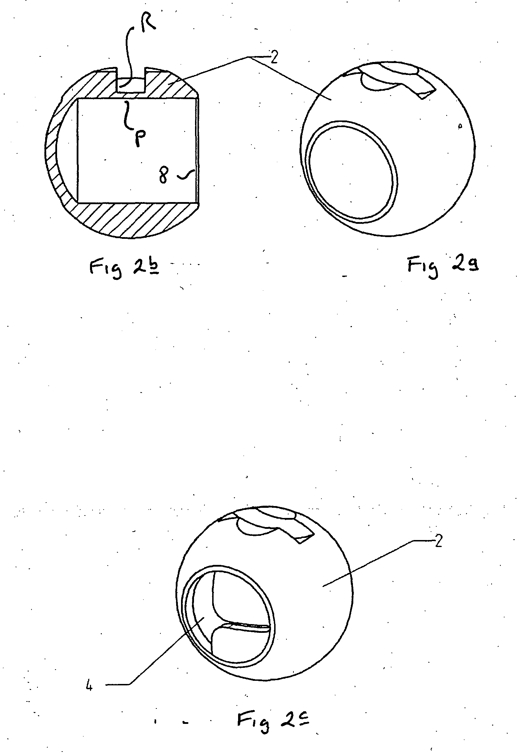

The passage P is then provided by drilling from the second end 8, and the recess R is provided by drilling, milling or another similar technique as desired. In figures 2a and 2b, the ball is shown in this condition, prior to forming of the opening 4.

Next, a hollow shaft is inserted into the passage P from the second end 8 to enable the ball 2 to be held securely while the opening 4 is formed in the wall of the ball 2 at the one end of the passage P. In a preferred method, the ball 2 is held stationary whilst opening 4 forming is performed.

In accordance with the invention, the opening 4 is formed by high pressure fluid jetting, conveniently by water jetting.

Water, or another fluid is ejected from a nozzle at pressure of at least 2000 bar and typically 4000 bar, onto the wall of the ball 2 at the one end of the passage P, with the nozzle spaced close to the wall, typically about 5mm away.

The nozzle is held in a moveable holder and is moved as the material of the wall of the ball 2 is cut, under computer control, to form the entire opening 4. In this way, the opening may be very accurately formed to the desired designed configuration without subjecting the wall of the ball 2 around the opening 4 to unwanted stresses, and without subjecting the wall of the ball 2 to temperatures which can compromise the structure of the ball 2 material particularly around the periphery of the opening 4.

Various modifications may be made without departing from the scope of the invention.

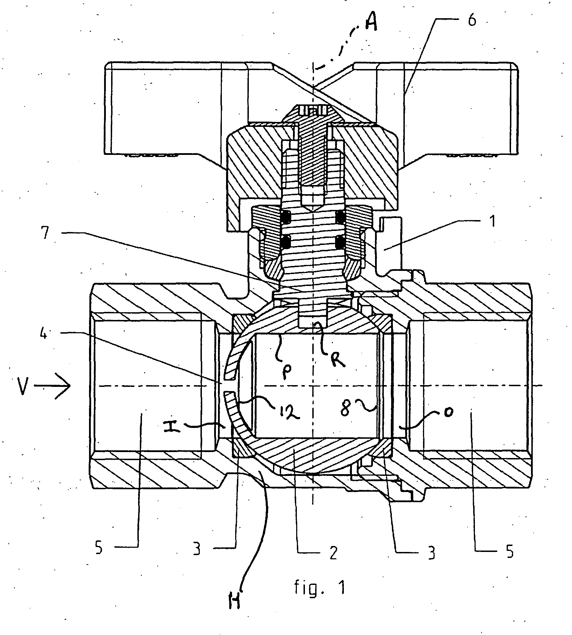

For example, as indicated in figure 1 of the drawings, fluid flow through the valve 1 is from left to right, such that when the ball 2 is rotated to an at least partially open position, fluid from the left port 5 passes to an inlet I of the housing H, through the opening 4 in the ball, then through the passage P of the ball 2 and then from an outlet O of the housing H to the right hand port 5 of the body of the valve 1. In another example, fluid flow may be in an opposite direction, i.e. through the passage P of the ball 2 and then from the passage P via the metering opening 4 in the ball 2.

Instead of the body having a pair of female threaded fittings, one or both of the inlet and outlet ports may be provided by male threaded fittings, or indeed by other kinds of fittings which enable the valve 1 to be provided in a fluid line.

Instead of the manually operable operating device provided by the spindle 7 and butterfly lever 6, the lever 7 may be connected exteriorly of the body of the valve 1 to another kind of manually graspable part, or indeed to a motorised driver.

The body of the valve 1 is preferably made in a similar material to the ball 2, e.g. brass or steel, but may be made in other suitable materials as desired.

The invention has particularly been devised for a valve for liquid fluids, but may be used for controlling the flow of gaseous fluids in which case, the configuration of the opening 4 may be very different to that shown in the drawings.

In each case the high pressure fluid jetting method of providing the opening 4 enables an accurate opening 4 to be formed without risking distorting the ball 2 or affecting the structure of the material of the ball 2 around the periphery of the opening 4.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A ball valve (1) having a housing (H) in which is mounted for rotation about an axis of operation (A), a valve member which is a ball (2), the ball (2) having a passage (P) through which fluid flows from an inlet (I) of the housing (H) to an outlet (O) of the housing (H), and the ball (2) having at one end of the passage (P) a metering opening (4) for the fluid, the ball (2) being rotatable about the axis of operation (A) between a first closed position in which the opening (4) is concealed by an adjacent housing wall and fluid flow through the passage (P) is prevented, and a fully open position in which the opening (4) is aligned with one of the inlet (I) and outlet (O) of the housing (H) to permit of maximum fluid flow through the passage (P) , and **characterised in that** the opening (4) in the ball (2) at the one end of the passage (P) is provided by removing material by high pressure fluid jetting.

2. A valve according to claim 1 **characterised in that** the opening (4) includes a slot part (S) which extends generally normally 'to the axis of operation (A) of the ball (2) and when the ball (2) is rotated a small amount from its closed position, permits only a minimal fluid flow through the passage (P) , and the slot part (S) opening into a main part (M) of the opening (4) which when the ball (2) is rotated to its fully open position allows a maximum fluid flow through the passage (P).

3. A valve according to claim 1 or claim 2 **characterised in that** a second end of the passage (P) opposite to the first end, and a passage part between the first and second ends of the passage (P) is a drilling and the opening (4) being formed at the one end of the passage(P) where the drilling has not penetrated an outer wall of the ball (2).

4. A valve according to any one of the preceding claims **characterised in that** the ball (2) is provided in a metallic material.

5. A valve according to any one of the preceding claims **characterised in that** to enable the ball (2) to be rotated in the housing (H) about the axis of operation (A), the ball (2) includes in the outer wall of the ball (2), a recess (R) to receive an operating device (7, 6) which extends through the housing (H) to an external operating position.

6. A valve according to any one of the preceding claims **characterised in that** the valve includes a valve body (1) in which the housing (H) is provided, the body having fluid inlet and outlet connections (5) which permit fluid to flow to the inlet (I) and from the outlet (O) of the housing (H) in which the ball valve member (2) is provided.

7. A method of making a ball (2) for a ball valve (1), the ball (2) in use being mounted in a housing_(H) for rotation about an axis of operation (A), the ball (2) having a passage (P) through which fluid flows from an inlet (I) of the housing (H) to an outlet (O) of the housing (H), and the ball (2) having at one end of the passage (P) a metering opening (4) for the fluid, and **characterised in that** the method includes forming the opening (4) in the ball at the one end of the passage (P) by removing material by high-pressure fluid jetting.

8. A method according to claim 7 **characterised in that** a second end of the passage (P) opposite to the first end, and a main passage part between the first and second ends of the passage are provided by drilling prior to the opening at the first end of the passage (P) being formed through the wall of the ball (2).

9. A method according to claim 7 or claim 8 **characterised in that** the opening (4) is formed by fluid jetting using fluid pressures of at least 2000 bar and more preferably at least 3000 bar and yet more preferably of about 4000 bar.

10. A method according to any one of claims 7 to 9 **characterised in that** during fluid jetting, desirably the method includes inserting into the passage (P) a hollow shaft to support the ball (2) and maintain the ball in a fixed position so that the opening (4) may accurately be formed.

11. A method according to any one of claims 7 to 10 **characterised in that** the fluid is jetted from a nozzle which is positioned close to the wall of the ball (4) at the one end of the passage (P) and the ball (1) is maintained stationary during water jetting and the nozzle is moved to create the desired shape of opening (4).

12. A method according to any one of claims 7 to 11 **characterised in that** the method includes providing a recess (R) in a wall of the ball (2) to receive an operating device (7) by which in use, the ball (2) may be rotated in the housing (H) about the axis of operation (A).
